# EUROPEAN PATENT SPECIFICATION

(11) **EP 1 336 962 B1**
(45) Date of publication and mention of the grant of the patent: **16.07.2008**
(21) Application number: 03011697.4
(22) Date of filing: 08.10.1997
(51) Int. Cl.: G11B 19/20, F16F 15/36

(54) **Disk player and turntable incorporating self compensating dynamic balancer**
Plattenspieler und Drehscheibe dazu mit selbstkompensierender dynamischer Auswuchtvorrichtung
Tourne-disques et platine pour ceci avec dispositif d'équilibrage dynamique automatique

(30) Priority: 09.10.1996 KR 9644932; 10.01.1997 KR 9700503
(43) Date of publication of application: 20.08.2003
(62) Divisional of application: 97307972.6
(73) Proprietor: Samsung Electronics Co. Ltd, Suwon City, Kyongki-do (KR)
(72) Inventor: Sohn, Jin-seung, Seocho-gu, Seoul (KR); Ro, Dae-sung, Anyany-city, Kyungki-do (KR)
(74) Representative: Brandon, Paul Laurence

(56) References cited:
- EP-A- 0 434 270
- US-A- 3 854 347
- PATENT ABSTRACTS OF JAPAN vol. 014, no. 376 (P-1092), 14 August 1990 (1990-08-14) & JP 02 139758 A (CANON INC), 29 May 1990 (1990-05-29)
- PATENT ABSTRACTS OF JAPAN vol. 015, no. 266 (P-1223), 5 July 1991 (1991-07-05) & JP 03 086968 A (FUJITSU LTD), 11 April 1991 (1991-04-11)

## Description

The present invention relates generally to the field of disk players, such as for a compact disc or a CD-ROM. More particularly, the invention relates to a self-compensating dynamic balancer for restricting internal vibrations generated due to an eccentric center of gravity of a disk. Particular embodiments of the invention relate to a disk player having a turntable incorporating the self-compensating dynamic balancer, a clamper incorporating the self-compensating dynamic balancer and/or a spindle motor incorporating the self-compensating dynamic balancer.

In general, a disk player records and/or reads information onto and/or from a recording medium such as a compact disk (CD), a CD-ROM or a digital versatile disk (DVD). Due to its sensitivity, the disk player is desired to protect the disk and optical pickup from external impacts and internal vibrations.

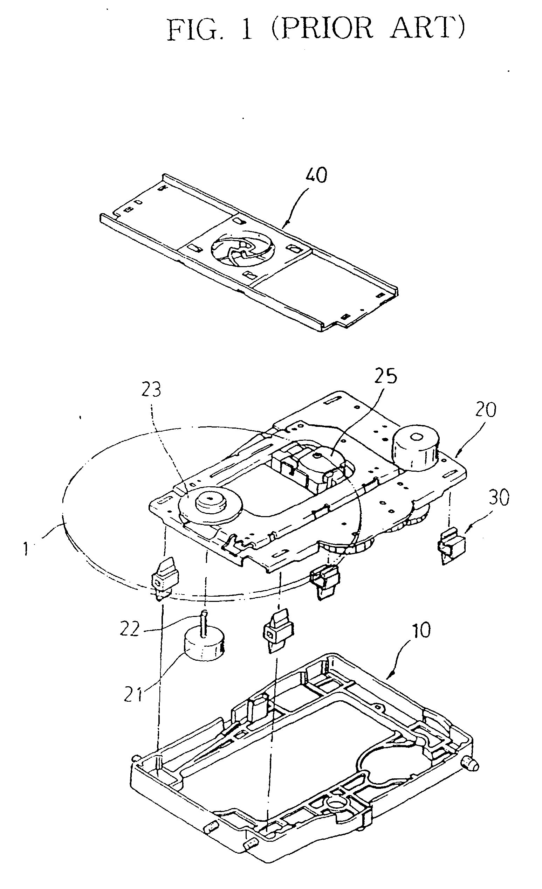

A typical disk player, as shown in FIG. 1, includes a deck base 10 hingedly-coupled to a housing (not shown) so as to be capable of rotating in a vertical plane, a deck plate 20 coupled to the deck base 10, a spindle motor 21 located on the deck plate 20 for providing a rotational force to a disk 1, a turntable 23 coupled to a rotational shaft 22 of the spindle motor 21 for accommodating the disk 1, a clamper 40 installed on the inner surface of the upper portion of the housing to face the turntable 23 for securing the disk 1 placed on the turntable 23, and an optical pickup 25 coupled to the deck plate 30 so as to be capable of moving across the disk 1 for performing recording and reproduction operations. The disk player includes buffering members 30 disposed between the deck base 10 and the deck plate 20 to inhibit any external vibrations transferred through the deck base 10 from being transferred directly to the deck plate 20, the spindle motor 21 and the optical pickup 25. The buffering member 30 is formed of a material such as soft rubber or polyurethane which can absorb external impacts.

The disk player adopting the buffering member 30 as above can effectively protect the driving of the disk 1 and the optical pickup 25 from external impacts. However, the dampening internal vibrations generated by the rotation of the spindle motor 21 due to an eccentric center of gravity of the disk is not taken into consideration. Commonly, an eccentric center of gravity of the disk is caused by a discrepancy between the rotational center of the disk and the center of gravity of the disk due to errors in the manufacturing process of the disk. Thus, the rotational shaft of the spindle motor 21 revolves because of whirling i.e. is caused to move in a horizontal plane so as to orbit its normal axis of rotation.

Such orbital movement of the rotational shaft of the spindle motor does not effect a low-speed disk player such as a 1X or 2X type. However, in the case of a high-speed model such as a 6X, 8X, 12X, 20X or 24X type, the effects of movement of the spindle motor become serious making recording/reproducing of information difficult.

To overcome the above problems, in a conventional high-speed disk player, the mass of the deck plate where the spindle motor is installed is increased or the rigidity of the buffering member is increased to reduce movements of the deck plate due to the eccentric center of gravity of the disk.

However, increasing the mass the deck plate is not appropriate for a high speed rotation. Also, the costs of the product increase and miniaturization of the product is hindered. Further, when the rigidity of the buffering member is increased, it is not possible to effectively dampen the external impacts or vibrations.

To solve the above problems, it is an aim of preferred embodiments of the present invention to provide a disk player in which external vibrations can be reduced and also internal vibrations generated due to an eccentric center of gravity of a disk can be limited. A further preferred aim is to achieve such limitation of internal and external vibrations without causing an increase in weight of the disk player.

EP-A-434 270 shows a typical prior art dynamic balancing arrangement with multiply ball races in the rotor of the drive motor containing ball bearings designed to compensate for eccentricity and imbalance and to thus reduce subsequent vibration.

According to a first aspect of the present invention there is provided a spindle motor incorporating a self-compensating dynamic balancer, comprising:
a rotation shaft;
a motor base having a through hole in which said rotation shaft is rotatably inserted;
a stator fixedly installed at said motor base and having a yoke and a coil wound around said yoke;
a rotor having a case which is fixed to an end of said rotation shaft and encloses said stator, and a magnet which is fixed inside said case to face said yoke;
at least a first and a second non-magnetic circular race which are integrally formed to be concentric and adjacent to said case and rotate around the center of rotation of said rotation shaft;
a mobile unit located inside each of said races to be capable of moving; and
a cover member which is coupled to an opening of said race for sealing the inner space of said race;
characterised in that;
the first and second circular races are formed to be concentric and adjacent to each other; and
said mobile unit includes at least one rigid body, and the weight of a mobile unit installed in the first race is different from the weight of a mobile unit installed in the second race.

The apparatus may be provided integral with one or more of a turntable, a clamper, or a spindle motor of a disk player.

For a better understanding of the invention, and to show how embodiments of the same may be carried into effect, reference will now be made, by way of example, to the accompanying diagrammatic drawings, in which:
Figure 1 is an exploded perspective view schematically illustrating a conventional disk player;
Figure 2 is an exploded perspective view illustrating a disk player according to an embodiment of the present invention;
Figures 3A through 3C are diagrams showing the relationship between an eccentric center of gravity position of a disk, the position of a rotation shaft and the center of rotation respectively according to different rotation speeds of the disk;
Figure 4 is a perspective view providing background knowledge for a self-compensating dynamic balancer according to an embodiment of the present invention;
Figure 5 is a cross sectional view of the self-compensating dynamic balancer shown in Figure 4 when a rigid body is used as a mobile unit;
Figure 6 is a cross sectional view of the self-compensating dynamic balancer shown in Figure 4 when a rigid body and a fluid are used as the mobile unit;
Figures 7 and 8 are cross sectional views of self-compensating dynamic balancers including first and second races, respectively according to an embodiment of the present invention;
Figures 9 through 12 are cutaway perspective views schematically illustrating the shapes of a rigid body which is used as the mobile unit for the self-compensating dynamic balancer according to an embodiment of the present invention;
Figures 13 through 16 are sectional views schematically illustrating the race and a cover member of the self-compensating dynamic balancer according to an embodiment of the present invention;
Figure 17 is a sectional view providing background knowledge for a self-compensating dynamic balancer according to an embodiment of the present invention;
Figure 18 is a sectional view taken along line A-A of Figure 17;
Figure 19 is an exploded perspective view providing background knowledge for a turntable suitable for a self-compensating dynamic balancer according to the present invention;
Figure 20 is a sectional view of a turntable incorporating a self-compensating dynamic balancer shown in Figure 19 when a rigid body and a fluid are employed as a mobile unit of the self-compensating dynamic balancer;
Figure 21 is a sectional view showing an embodiment of a turntable incorporating a self-compensating dynamic balancer according to the present invention;
Figure 22 is an exploded perspective view providing background knowledge for a clamper suitable for a self-compensating dynamic balancer according to an embodiment of the present invention;
Figure 23 is a sectional view providing background knowledge for a clamper when a yoke is employed as a pressing unit suitable for a self-compensating dynamic balancer according to an embodiment of the present invention;
Figure 24 is a sectional view providing background knowledge for a clamper when a pressing plate and an elastic member are employed as a pressing unit suitable for a self-compensating dynamic balancer according to an embodiment of the present invention;
Figure 25 is a sectional view providing background knowledge for a clamper when a rigid body and a fluid are employed as a mobile unit suitable for a self-compensating dynamic balancer according to an embodiment of the present invention;
Figure 26 is a sectional view showing an embodiment of a clamper incorporating a self-compensating dynamic balancer according to an embodiment of the present invention;
Figure 27 is an exploded perspective view providing background knowledge for a spindle motor suitable for a self-compensating dynamic balancer according to the present invention;
Figure 28 is a sectional view providing background knowledge for a spindle motor when a rigid body is employed as a mobile unit suitable for a self-compensating dynamic balancer according to an embodiment of the present invention;
Figure 29 is a sectional view providing background knowledge for a spindle motor when a rigid body and a fluid are employed as a mobile unit suitable for a self-compensating dynamic balancer according to an embodiment of the present invention;
Figure 30 is an exploded perspective view of an embodiment of a spindle motor incorporating a self-compensating dynamic balancer; and
Figures 31A and 31B are diagrams showing the relationship between the eccentric center of gravity position of a disk, the position of the rotation shaft and the ideal center of rotation respectively according to different rotation speeds of the disk of the disk player having a self-compensating dynamic balancer.

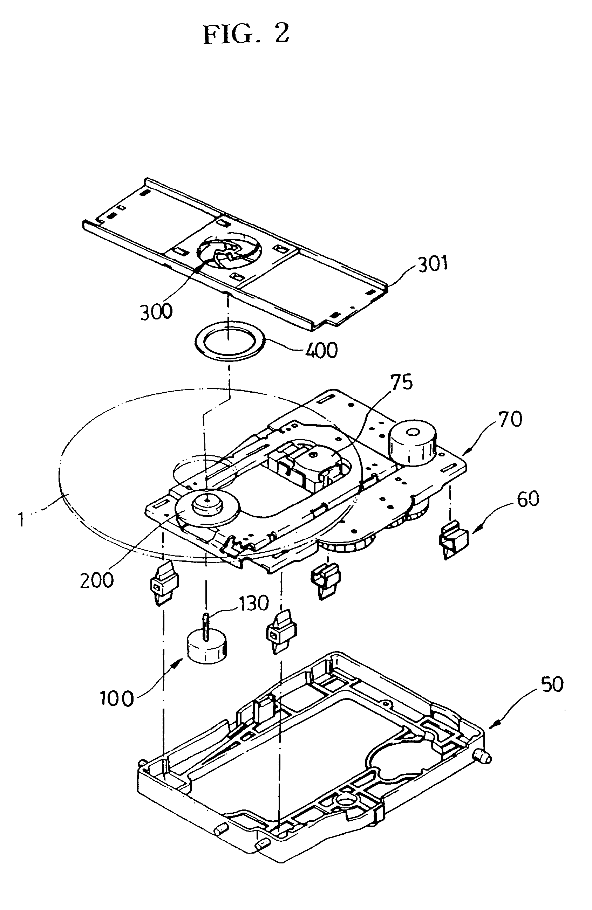

As shown in Figure 2, the disk player according to a preferred embodiment of the present invention comprises a deck base 50, a deck plate 70 elastically coupled to the deck base 50, a buffering member 60 interposed between the deck base 50 and the deck plate 70, a spindle motor 100 installed at the deck plate 70, a turntable 200 and an optical pickup 75, a clamper 300 installed to face the turntable 200 for holding a disk 1 placed on the turntable 200, and a self-compensating dynamic balancer 400 for preventing eccentric rotation of a rotation shaft 130 of the spindle motor 100 due to an eccentric center of gravity of the disk 1.

The deck plate 70 receives externally delivered impacts through the deck base 50 which are alleviated by the buffering member 60. Accordingly, it is preferable that the buffering member 60 is formed of material exhibiting low rigidity such as soft rubber or polyurethane in order to alleviate external vibrations delivered from the deck base 50. Also, the deck plate 70 is preferably light for realizing miniaturization thereof. The spindle motor 100 provides a rotational force to rotate the disk 1. The center of the turntable 200 is fixed to the rotation shaft 130 and the disk 1 is placed on the upper surface of the turntable 200 during operation. The clamper 300 facing the spindle motor 100 prevents unnecessary movements of the disk 1 placed on the spindle motor 100. The turntable 200 is fixed to the rotation shaft 130 and rotated according to the spindle motor 100. Thus, the disk 1 and the clamper 300 rotate together.

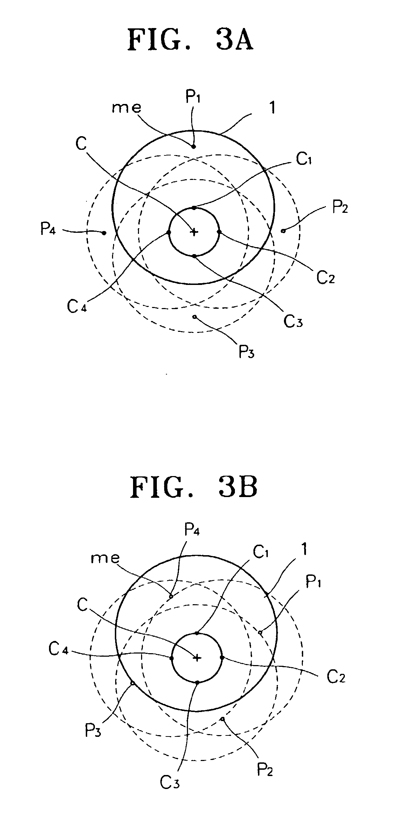

Referring to Figures 3A through 3C, the relationship between the eccentric center of gravity position of a disk, the position of the rotation shaft and the ideal center of rotation according to the rotation speed of the disk will now be described.

Figure 3A is a diagram schematically showing the orbital and rotational movements of the disk when the rate of orbital rotation of the spindle motor is equal to or less than the natural frequency of the deck plate. Here, the natural frequency is determined by the elastic modulus of the buffering member and mass of the deck plate and other elements to be installed on the deck plate, and represents the rate of vibration in a horizontal direction, i.e., in a direction parallel to the plane of the disk. As shown in the drawing, when an eccentric center of gravity mₑ, exists at a position p₁ spaced apart by a predetermined distance from the ideal rotation center c₁ of the disk 1, the ideal rotation center c₁ of the disk rotates around a center c, moving to positions c₂, c₃ and c₄. The positions of the eccentric center of gravity mₑ of the disk corresponding to each of the ideal rotation center positions c₂, c₃ and c₄ respectively are p₂, p₃ and p₄. In this case, the respective positions p₁, p₂, p₃ and p₄ of the eccentric center of gravity mₑ and the revolution center c of the disk 1 are located opposite each other with respect to each of the ideal rotation center positions c₁, c₂, c₃ and c₄ of the disk 1.

Figure 3B is a diagram schematically showing the orbital and rotational movements of the disk when the rate of revolution of the spindle motor is near the natural frequency of the deck plate. As shown in the drawing, the revolution center c is located in a direction perpendicular to that of the respective eccentric center of gravity positions p₁, p₂, p₃ and p₄ with respect to positions c₁, c₂, c₃ and c₄.

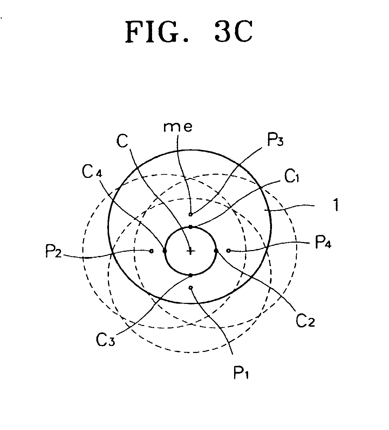

Figure 3C is a diagram schematically showing the orbital and rotational movements of the disk when the rate of revolution of the spindle motor is greater than the natural frequency of the deck plate, which corresponds to the normal rotation speed of a disk allowing information to be recorded onto or read from the disk. As shown in the drawing, the revolution center c is located in the same direction as the respective eccentric center of gravity positions p₁, p₂, p₃ and p₄ with respect to positions c₁, c₂, c₃ and c₄.

The self-compensating dynamic balancer (400 of Figure 2) is provided to compensate for the eccentricity of the disk. The self-compensating dynamic balancer 400 is incorporated into at least one of the rotor of the spindle motor 100, the rotational shaft 130, the turntable 200 and the clamper 300 which are rotated by the rotational force provided from the spindle motor 100.

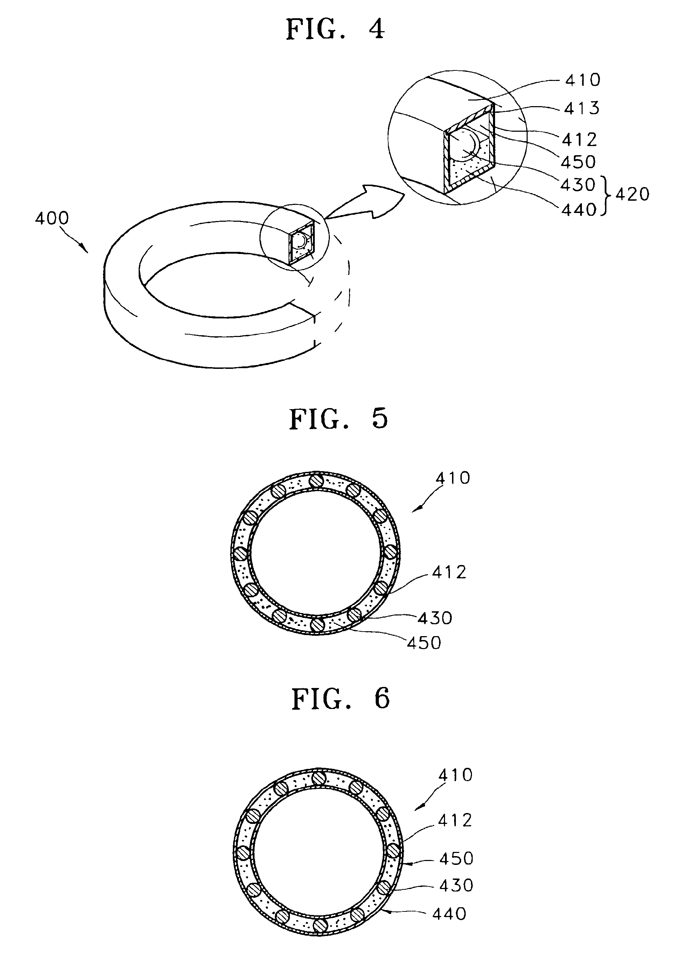

Figure 4 provides background knowledge for an embodiment of the present invention. As shown in Figure 4, A self-compensating dynamic balancer 400 includes a circular tube 410 whose cross-section is rectangular having a race 450 and a mobile unit 420 movably disposed inside the race 450.

The tube 410 includes a main body 412 through which the race 450 is formed and a cover member 413 for sealing the race 450 in a state in which a mobile unit 420 is sealed therein. The tube 410 rotates coaxial with the rotation shaft 130.

The coupling between the cover member 413 and the main body 412 is made such as by using an adhesive, by forming a corresponding groove and protrusion on the cover member 413 and main body 412 or by a screw. The detailed description thereof will be omitted since such coupling methods are well known.

The mobile unit 420 includes a plurality of rigid bodies 430 and/or a fluid 440 which can move outward from the rotational center by a centrifugal force generated during rotation of the tube 410.

Figure 5 shows the race 450 in which a plurality of rigid bodies 430 are included as the mobile unit 420. Each rigid body 430 is installed to be capable of freely rolling or sliding so that the position thereof can be determined by the centrifugal force during rotation of the tube 410.

Figure 6 shows the race 450 in which a plurality of the rigid bodies 430 and the fluid 440 are included.

Since the fluid 440 has a large contact area with the race 450 and the cover member 413 (see Figure 4) and exhibits a very high viscosity compared to the rigid body 430 only, the fluid 440 employed with the rigid body 430 in the race 450 can effectively compensate for an internal vibratory force generated due to the eccentric center of gravity of the disk 1 (see Figure 2). That is, the orbital revolution of the rotation shaft 130 due to the eccentric center of gravity mₑ of the disk can be roughly balanced and reduced by the movements of the rigid bodies 430 and finely balanced and reduced by the fluid 440.

Here, the amount of fluid 440 that can be included ranges from an amount which coats the outer surface of the rigid body 430 to a thickness of only a few microns. In this case, the fluid 440 reduces friction between the rigid body 430, the race 450 and the cover member 414, rather than actually contributing to balancing.

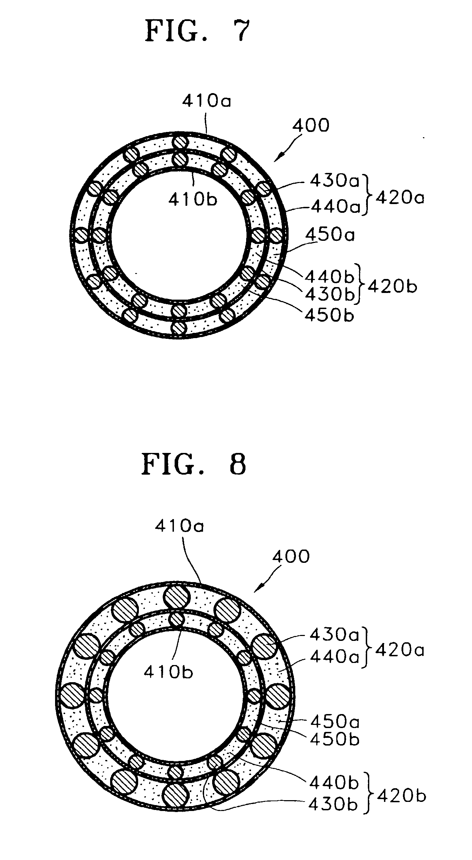

As shown in Figure 7, an embodiment of the self-compensating dynamic balancer includes first and second rectangular cross-sectioned tubes 410a and 410b arranged concentric and adjacent to each other and first and second mobile units 420a and 420b respectively disposed inside the first and second tubes 410a and 410b to be capable of moving.

The respective first and second tubes 410a and 410b independently serve as a balancer and can finely balance and reduce the orbits of the rotation shaft 430. Here, each of the first and second mobile units 420a and 420b is the same as that of the mobile unit 420 described with reference to Figures 5 and 6.

The first and second tubes 410a and 410b and the mobile units 420a and 420b respectively installed therein can be configured as shown in Figure 8. That is, the width and height of the first race 450a formed in the first tube 410a can be configured different from those of the second race 450b formed in the second tube 410b. Also, the size and density of the first and second mobile units 420a and 420b located in the first race 450a and the second race 450b, respectively, can be made different from each other. Again, each of the first and second mobile units 420a and 420b is the same as the mobile unit 420 described with reference to Figures 5 and 6.

When the first race 450a is formed to have a width and height greater than the second race 450b and the first mobile unit 420a which is heavier than the second mobile unit 420b is employed, the first mobile unit 420a roughly balances and reduces the orbital rotation of the rotation shaft 130 due to the eccentric center of gravity mₑ of the disk 1 and then the second mobile unit 420b finely balances and reduced the orbital rotation of the rotation shaft 130.

The self-compensating dynamic balancer described with reference to Figures 7 and 8 can have two or more tubes.

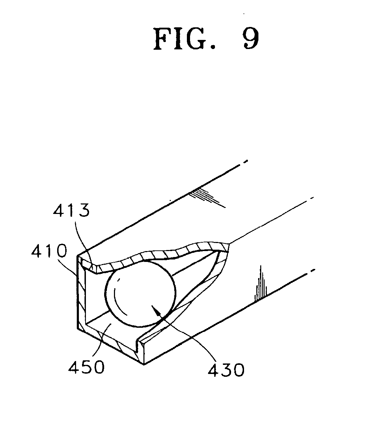

Figures 9 through 11 show different shapes and arrangements of the rigid body as rigid bodies 430, 430', and 430" installed inside the race 450.

Figure 9 shows a case in which the rigid body 430 is spherical.

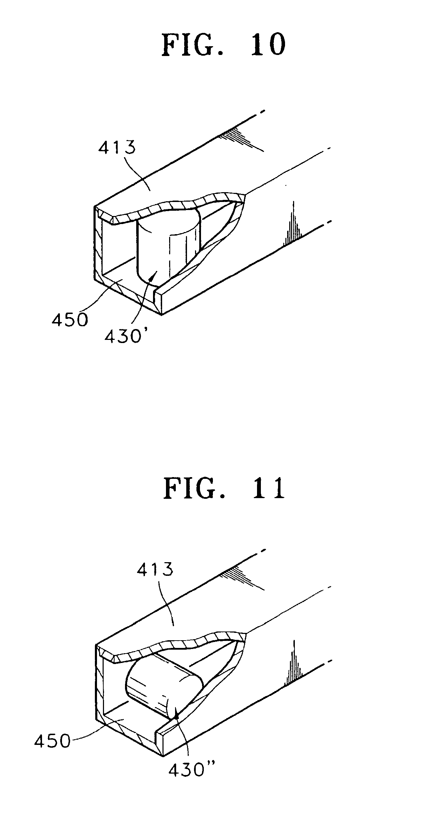

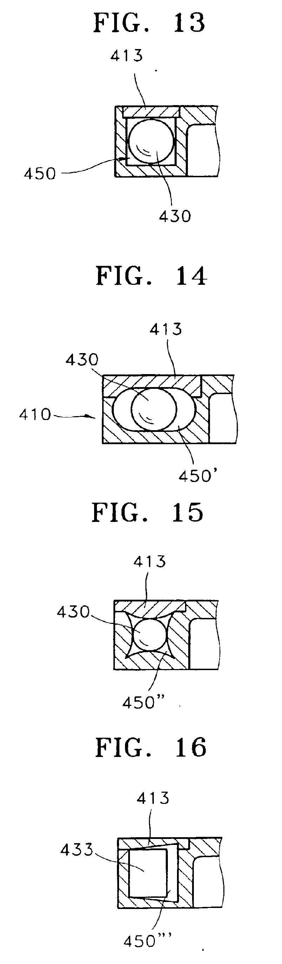

Figure 10 shows a case in which the rigid body is cylindrical. The cylindrical rigid body 430' is formed to be capable of rolling with the outer surface of the cylindrical rigid body 430' contacting the inner surfaces of the inner and outer walls of the race 450. In this case, the upper and lower flat surfaces of the cylindrical rigid body 430' may slide in contact with the race 450 generating friction therebetween. In consideration of the above, it is preferable that the race 450 has the shape shown in Figure 16 which will be described later.

Figure 11 shows a case in which the rigid body is a truncated conic body 430" which can roll with the outer conic surface contacting the bottom surface of the inside of the race 450.

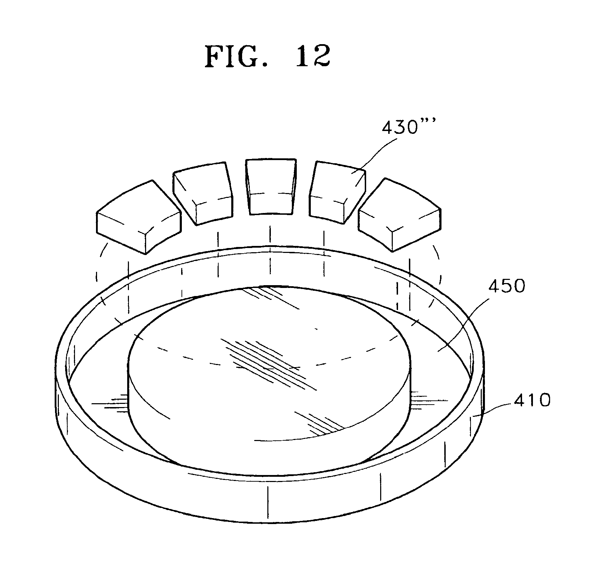

Also, Figure 12 shows a case in which the rigid body is a fan-shaped block 430'" which is inserted to be capable of sliding while contacting the bottom surface and the outer circumferential surface inside the race 450.

Also, the shape of the rigid body 430 may be modified into other shapes as long as the body can freely move inside the race 450.

Here, when being influenced by a magnetic force, there may be a possibility that the rigid body 430 cannot roll smoothly due to magnetic attraction. Accordingly, it is preferable that the rigid body 430 is formed of a non-magnetic substance so that the rigid body 430 is not influenced by a magnet (not shown).

Preferably, the rigid body 430 is formed of tungsten carbide (WC), beryllium steel (CuBe), Hastelloy C-276, silicon nitride (Si₃N₄), zirconia (ZrO₂), austenite-series stainless YHD50, a non-magnetic metal such as SUS300, SUS304 and SUS316, ceramic or a synthetic resin.

As described above, when the rigid body 430 is formed of a non-magnetic substance, the rigid body 430 is not influenced by a magnetic forces from an adjacent magnet. Thus, the rigid body 430 moves dependent only upon the position of the eccentric center of gravity of the disk 1 (see Figure 2) and the rotation of tube 410.

Further, the rigid body 430 is preferably formed of a non-oxidizing substance or anti-oxidation coated, since smooth rolling or sliding of the rigid body 430 inside the race 450 will be hindered by oxidation, i.e., corrosion.

For that purpose, the rigid body 430 can be formed of substance such as SUS300, ceramic or synthetic resin. Also, the outer surface of the rigid body 430 can be anti-oxidation processed by coating a base material of carbon steel or chromium steel with zinc or nickel-chromium plated.
Also, the rigid body 430 can be formed of a substance having fine particles when oxidized with the air, so that the movement of the rigid body 430 is not affected.

The shapes of the race 450 and the cover member 413 will now be described with reference to Figures 13 through 16.

As shown in Figure 13, it is preferable that the section through the race 450 and the cover member 413 is rectangular. Alternatively, as shown in Figure 14, the cross-section of the race 450' and the cover member 413 may be an oval. Thus, by reducing the height of the tube 410, the internal vibratory force generated during rotation of the tube 410 can be effectively alleviated.
Also, as shown in Figure 15, the cross-section the race 450" may bulge inward. Such a case is very appropriate for minimizing the contact area between the rigid body 430 and the race 450.

Further, as shown in Figure 16, the inner wall of the race 450" is formed to be higher than the outer wall so that the upper and lower surfaces of the race 450 are at an angle. Thus, when the cylindric rigid body 430' (see Figure 10) is employed, sliding movements of the rigid body 430' inside the race 450'" can be minimized.

It is preferable that the tube 410 including a race 450 and a cover member 413 are formed of a non-magnetic substance to effectively prevent the influence of a magnetic force between the rigid body 430 and the race 450. That is, the tube 410 and the cover member 413 may be formed of substance such as tungsten carbide (WC), beryllium steel (CuBe), Hastelloy C-276, silicon nitride (Si₃N₄), zirconia (ZrO₂), brass, aluminum, austenite-series stainless YHD50, a non-magnetic metal such as SUS300, SUS304 and SUS316, ceramic or a synthetic resin.

Also, the tube 410 is preferably formed of a non-oxidizing substance such as SUS300, ceramic or a synthetic resin or anti-oxidation coated of zinc or by nickel-chromium plated over a base material of carbon steel or chromium steel.

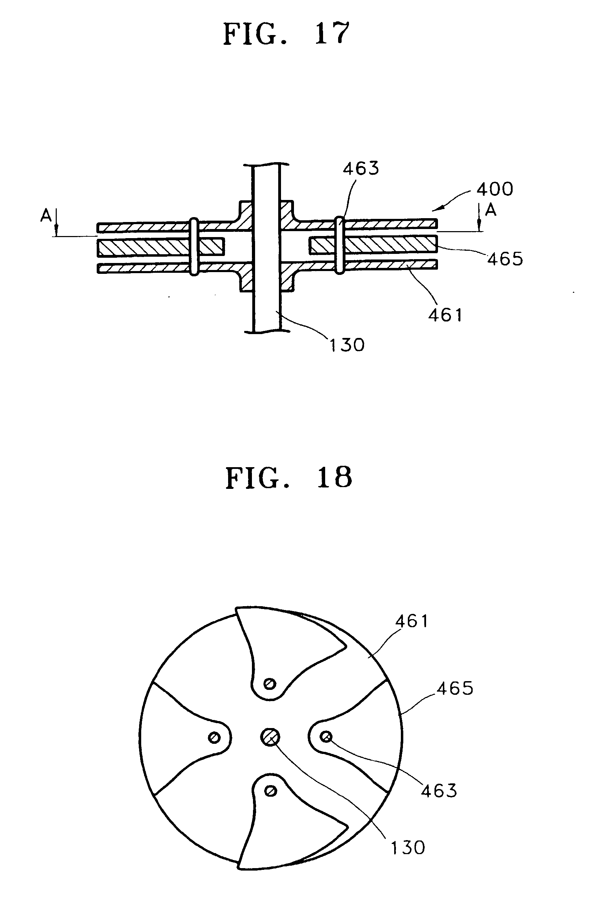

Figures 17 and 18 provide background knowledge for an embodiment of the present invention. As shown in Figures 17 and 18, an embodiment of a self-compensating dynamic balancer 400 can further include a support plate 461 perpendicularly fixed to the rotation shaft 130 and at least one pivoting plate 465 hinge-coupled to the support plate 461 being parallel to the same. Here, it is preferable that a pair of the support plates 461 are provided parallel with each other and the pivoting plate(s) 465 is(are) coupled therebetween. The pivoting plate 465 is pivot-coupled between the support plates 461 by a fixing pin 463.

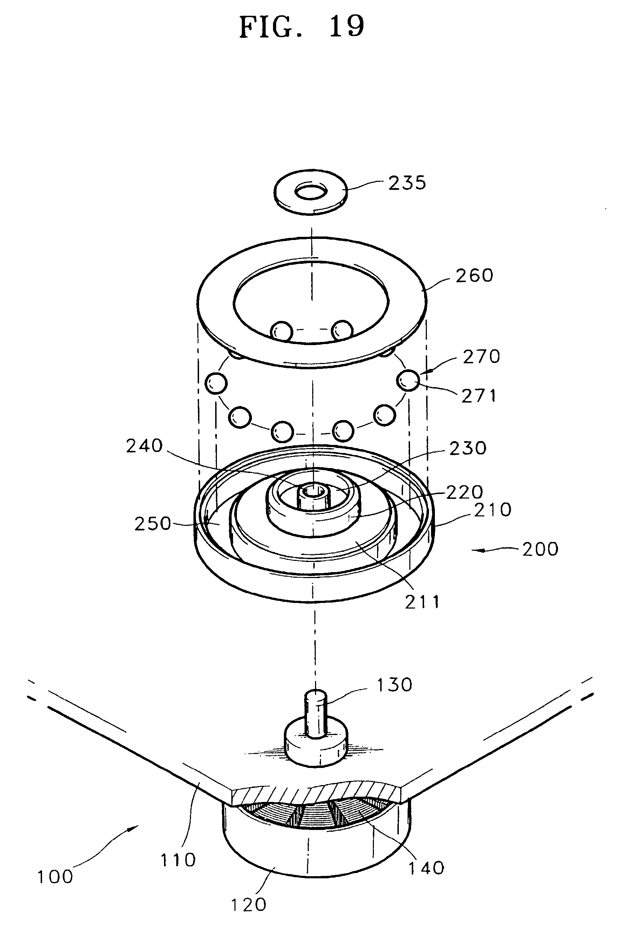

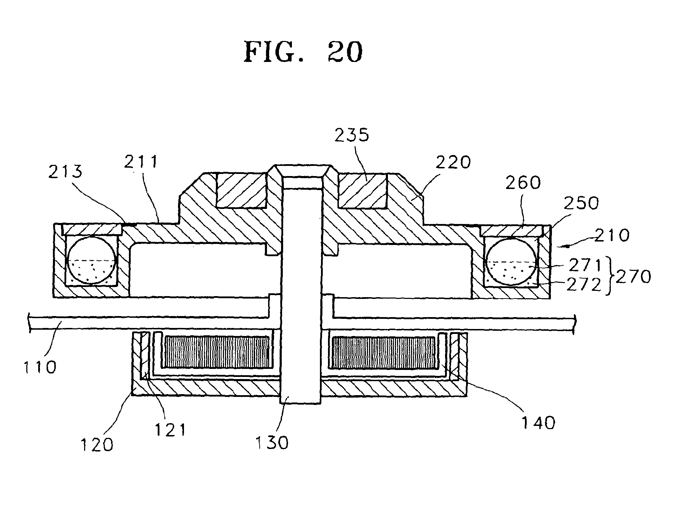

Figures 19 and 20 provide background knowledge for an embodiment of the present invention. Referring to Figures 19 and 20, a turntable 200 suitable for use in an embodiment of a self-compensating dynamic balancer 400 of the present invention will now be described.

A placing member 210 of the turntable 200 is coupled to the rotation shaft 130 of the spindle motor 100. For that purpose, a coupling hole 240 is formed at the center of the placing member 210 so that the rotation shaft 130 inserts into and is fixed to the inside of the coupling hole 240. A circular locating protrusion 220 which fits through the center hole of the disk 1 (see Figure 2) is formed on an upper surface of the placing member 210. The locating protrusion 220 is concentric with the coupling hole 240. A circular race 250 is formed in the placing member 210 around the locating protrusion 220. A plurality of mobile units 270 which can move away from the rotation center of the placing member 210 due to a centrifugal force are inserted into the race 250. The race 250 is sealed by a cover member 260 with the mobile units 270 inside. After the cover member 260 is assembled onto the upper portion of the placing member 210, the upper surface of the cover member 260 is processed to be a flat surface appropriate for contact with the surface of the disk 1.

The cover member 260 and the placing member 210 are coupled using an adhesive, a groove and protrusion assembly, or a screw. A detailed description thereof will be omitted since such coupling techniques are well-known. As shown in the drawing, an open portion of the race 250 can be formed on the entire upper surface of the race 250 or on a portion of the upper surface thereof being large enough to allow insertion of the mobile unit 270 into the race 250.

Also, the turntable 200 preferably includes a magnet 235 to firmly hold the disk 1 against the surface of the placing member 210 together with the clamper 301 (see Figure 2) by a magnetic attraction therebetween. The magnet 235 is inserted into an installation groove 230 formed between the coupling hole 240 and the locating protrusion 220.

A placing surface 211 processed to be a flat surface to contact the surface of the disk 1 is provided on upper surface of the placing member 210 between the race 250 and the locating protrusion 220. A frictional member 213 can be installed to increase the friction between the disk 1 and the placing surface 211 to prevent the slip of the disk 1 with respect to the placing member 210.

The mobile unit 270 consists of a plurality of rigid bodies 271 and/or a fluid 272 which can be moved away from the center of the placing member 210 due to the centrifugal force generated during rotation of the placing member 210.

Figure 19 shows an example in which a plurality of rigid bodies 271 are included as a mobile unit 270 inside the race 250. The rigid body 271 can freely roll or slide according to the centrifugal force during rotation of the placing member 210.

As in the embodiment shown with reference to Figures 9 through 12, the shape of the rigid body 271 located inside the race 250 is preferably spherical, cylindrical, has a truncated conic body or is a fan-shaped block. However, the shape of the rigid body 271 may be modified into other shapes as long as the body can freely move inside the race 250.

A fluid 272 can be further included together with the rigid body 271 as the mobile unit 270. Since the fluid 272 has a larger contact area with respect to the race 250 and the cover member 260 and exhibits a very high viscosity compared to the rigid body 271, the fluid 272 employed with the rigid body 271 inside the race 250 can effectively compensate for an internal vibratory force generated due to the eccentric center of gravity of the disk 1 (see Figure 2).

Here, the fluid 272 can be included in variable amounts, from an amount sufficient to coat the outer surface of the rigid body 271 to the thickness of only a few microns. In this case, the fluid 272 reduces friction between the rigid body 271, the race 250 and the cover member 260.

Here, when the rigid body 271 is formed of the non-magnetic substance, the rigid body 271 is not influenced by the magnetic force from the magnet 235 installed inside the locating protrusion 220 or the magnet 235 around the placing member 210. Thus, the rigid body 271 moves smoothly dependent only upon the position of the eccentric center of gravity of the disk 1 and the rotation of the placing member 210.

Further, the rigid body 271 is preferably formed of a non-oxidizing substance or anti-oxidation coated, since rolling or sliding of the rigid body 271 inside the race 250 is hindered by oxidation, i.e., corrosion. Also, the rigid body 271 can be formed of a substance having fine particles when oxidized in air, so that the movement of the rigid body 271 is not affected.

Also, the fluid 272 can be employed without the rigid body 271 as the mobile unit 270. In such a case, the cover member 260 and the race 250 are sealed to each other to prevent leakage of the fluid 272.

As in the embodiment with reference to Figures 13 through 16, the section of the race 250 and the cover member 260 is a rectangular 450, an oval 450', or inwardly bulge 450". Also, the inner wall of the race 250 is formed to be higher than the outer wall of the same so that a race in which the upper and lower surfaces of the race 250 are at an angle is possible (as in race 450"').

It is preferable that the placing member 210 including race 250 and the cover member 260 are formed of a non-magnetic substance to effectively prevent the influence of a magnetic force between the rigid body 271 and the race 250. That is, the placing member 210 and the cover member 260 are formed of a substance such as tungsten carbide (WC), beryllium steel (CuBe), Hastelloy C-276, silicon nitride (Si₃N₄), zirconia (ZrO₂), brass, aluminum, austenite-series steel YHD50, a non-magnetic metal such as SUS300, SUS304 and SUS316, ceramic or a synthetic resin.

Also, the placing member 210 is preferably formed of a non-oxidizing substance such as SUS300, ceramic or a synthetic resin or anti-oxidation coated of zinc or by nickel-chromium plated over a base material of carbon steel or chromium steel.

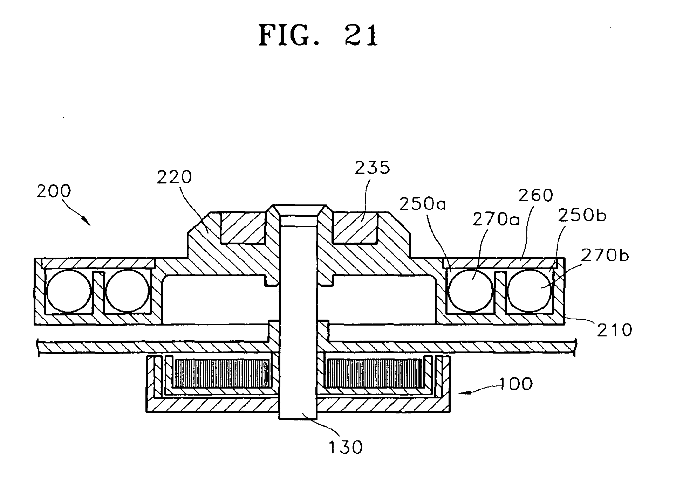

Referring to Figure 21, a turntable 200 incorporating the embodiment of the self-compensating dynamic balancer will now be described.

As shown in the drawing, the turntable 200 includes a placing member 210, a locating protrusion 220 formed to be protruding from the center of the placing member 210 to insert into the center hole of the disk 1 (see Figure 2), a circular race 250 formed inside the placing member 210, a mobile unit 270 installed to be capable of moving inside the race 250, and a cover member 260 for covering the open portion of the race 250. Here, it is a characteristic feature that first and second races 250a and 250b are provided which are formed concentric and adjacent to each other with respect to the center of the placing member, differently from the first embodiment. First and second mobile units 270a and 270b shaped as described above are inserted into the first and second races 250a and 250b, respectively.

The mobile units 270a and 270b consist of one of a variously shaped rigid body 271 and/or a fluid 272 as described with reference to Figures 9 through 12. When the rigid body 271 is included as the mobile unit 270, it is preferable that the rigid body 271 is formed of a non-magnetic substance, a non-oxidizing substance, or is anti-oxidation coated. Also, the shape of each section of the first and second races 250a and 250b is one of those described with reference to Figures 13 through 16.

Here, it is preferable that the masses of the respective mobile units 270a and 270b inserted in the first and second races 250a and 250b are different from each other.

This is because of the consideration that a centrifugal force applied to the mobile unit 270 during the rotation of the placing member 210 is proportional to the respective mass of the mobile unit 270 and the distance between the center position of the mobile unit 270 and the rotation center of the placing member 210. That is, the diameters of the first and second races 250a and 250b and the mass of the mobile unit 270 are determined by considering the allowable error of the eccentric center of gravity of the disk.

Although the turntable 200 having two races 250a and 250b is described in Figure 21, the turntable can be provided with two or more races.

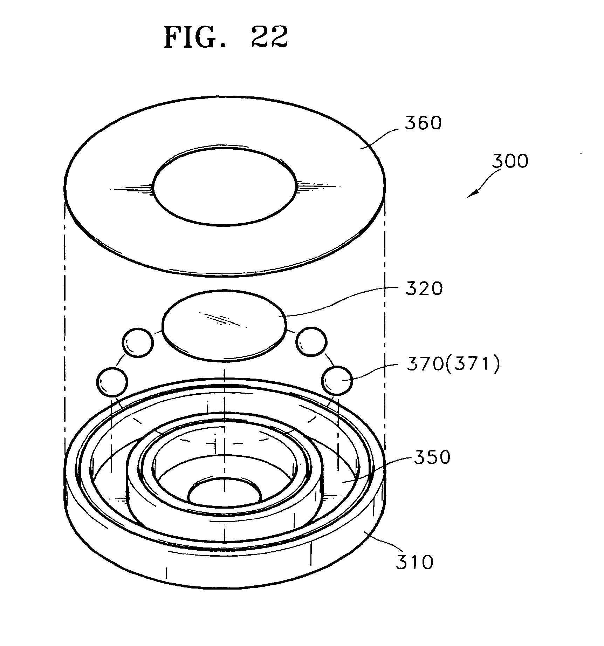

A clamper 300 incorporating the first embodiment of the self-compensating dynamic balancer will be described in detail with reference to Figures 22 through 26.

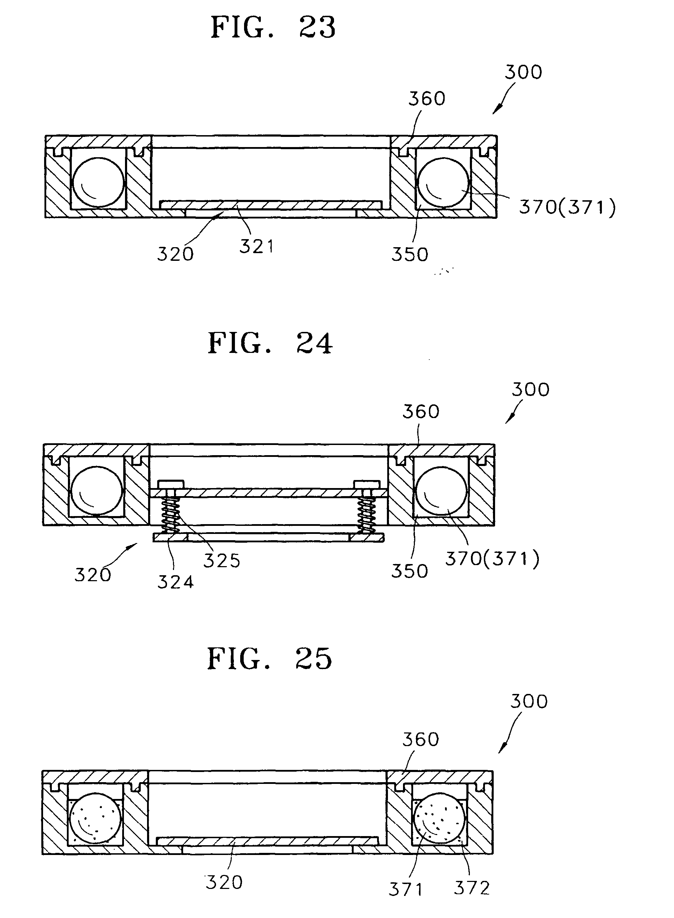

As shown in Figure 2, the clamper 300 incorporating a self-compensating dynamic balancer is positioned on the turntable 200 by the bracket 301 coupled with the deck base 50 and holds the disk 1 in place on the turntable 200. Referring to Figures 22 and 23, the clamper 300 incorporating a self-compensating dynamic balancer includes a clamper main body 310, a pressing unit 320, a race 350, a mobile unit 370 and a cover member 360. The clamper main body 310 is installed on the deck base 50 to perform a motion relative to the turntable 200. The pressing unit 320 is installed at the clamper main body 310 to press the disk 1 in place on the turntable 201. The race 350 is formed inside the clamper main body 310 and is concentric with the rotation center of the clamper main body 310. The mobile unit 370 is installed to be capable of moving inside the race 350 and moves toward the outer circumference of the clamper main body 310 due to a centrifugal force generated during the rotation of the clamper main body 310. The cover member 360 covers the open portion of the race 350.

The cover member 360 and the race 350 are coupled using an adhesive, a groove and protrusion assembly formed at corresponding positions, or a screw. A detailed description thereof will be omitted since such coupling techniques are well-known.
As shown in the drawing, the open portion of the race 350 can be formed on the entire upper surface of the race 350 or on a portion of the upper surface thereof being large enough to allow the mobile unit 370 to insert into the race 350.

The pressing unit 320 can be a yoke 321 coupled to the lower portion inside the clamper main body 310 as shown in Figure 23.

As shown in Figures 19 through 21, when the magnet 235 is provided to the turntable 200, the yoke 321 presses the disk 1 (see Figure 2) using the mutual magnetic attraction with the magnet 235.

Also, the pressing unit 320 may be a pressing plate 324 and an elastic member 325, as shown in Figure 24. The pressing plate 324 is installed at the lower surface of the clamper main body 310 to be capable of moving up and down. The elastic member 325 is interposed between the clamper main body 310 and the pressing plate 324 to allow the pressing plate 324 to elastically press the disk 1 (see Figure 2).

Accordingly, when the turntable 200 moves relatively to the clamper main body 310, e.g., the turntable 200 is lifted while the clamper main body 310 is stationary so that the turntable is in proximity with the clamper main body 310 and the disk 1 placed on the turntable 200 is held by the pressing unit 320. Consequently, the clamper main body 310 rotates, being engaged with the rotating turntable.

The mobile unit 370 includes a plurality of rigid bodies 371 and/or a fluid 372 to move away from the rotation center of the rotating clamper main body by the centrifugal force inside the race 350.
Figures 22 through 24 show cases in which a plurality of rigid bodies 371 are included inside the race 350 as the mobile unit 370. The rigid body 371 is installed to be capable of freely rolling or sliding such that the position thereof can be determined by the centrifugal force during rotation of the placing member.

It is preferable that the rigid body 371 is spherical, cylindrical, has a truncated conic shape, or is a fan-shaped block, as shown in Figures 9 through 12. However, the shape of the rigid body 371 may be modified on the condition that the rigid body 371 can freely move inside the race 350.

As shown in Figure 25, the fluid 372 can be further comprised along with the rigid body 371 as the mobile unit 370. Since the fluid 372 has a large contact area with respect to the race 350 and the cover member 360 and exhibits very high viscosity compared to the rigid body 371, the fluid 372 employed with the rigid body 371 inside the race 350 can effectively compensate for an inside vibratory force generated due to the eccentric center of gravity of the disk 1 (see Figure 2).

Here, it is preferable that the rigid body 371 is formed of a non-magnetic substance to be free from influence of the magnetic force of the magnet 235 (see Figure 19). In this case, the movement of the rigid body 371 is determined dependent only on the eccentric center of gravity position of the disk 1 and the rotation of the clamper main body 310.

Also, the rigid body 371 is preferably formed of a non-oxidizing substance or is anti-oxidation coated to prevent the smooth rolling or sliding of the rigid body 371 inside the race 350 from being hindered by oxidation, i.e., corrosion. Also, the rigid body 371 can be formed of a substance having fine particles when oxidized in air, so that the movement of the rigid body 371 is not affected.

The fluid 372 can be employed without the rigid body 371 as the mobile unit 370.

The shapes of a portion formed by the race 350 and the cover member 360 where the mobile unit 370 is a shape described with reference to Figures 13 through 16. That is, the cross section has a rectangular shape, an oval shape, or an inwardly bulging shape.

Also, it is preferable that the clamper main body 310 including the race 350 and the cover member 360 are formed of a non-magnetic substance to be free from influence of a magnetic force generated between the rigid body 371 and the race 350. Further, the clamper main body 310 is preferably formed of a non-oxidizing substance or is anti-oxidation coated.

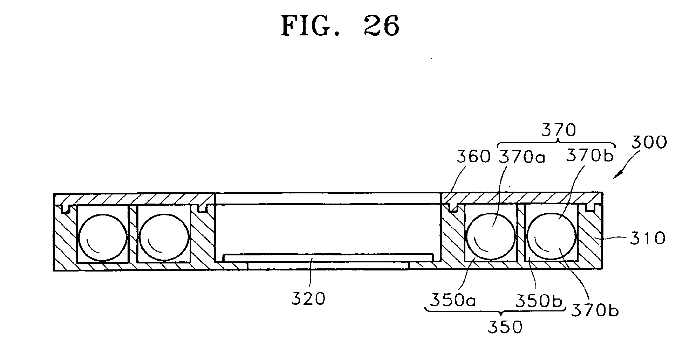

Referring to Figure 26, the clamper 300 incorporating the embodiment of the self-compensating dynamic balancer will now be described.

As shown in the drawing, the clamper 300 includes a clamper main body 310, a pressing unit 320 installed at the clamper main body 310 and which presses the disk 1 (see Figure 2) in place on the turntable 200, a circular race 350 formed inside the clamper main body 310 and concentric with the rotation center of the clamper main body 310, a mobile unit 370 installed to be capable of moving inside the race 350, and the cover member 360 for covering an open portion of the race 350. Here, a characteristic feature of the present embodiment which distinguishes it from the first embodiment is that first and second races 350a and 350b formed adjacent to each around the rotation center of the clamper main body 310 (see Figure 4) are provided as the race 350.

As described referring to Figures 9 through 12, the mobile unit 370 includes a rigid body 371 of various shapes and/or a fluid 372. In the case that the rigid body 371 is included as the mobile unit 370, it is preferable that the rigid body 371 is formed of a non-magnetic, non-oxidizing substance, or is anti-oxidation coated. Also, the sectional shapes of each of the first and second races 350a and 350b are the same as those described earlier referring to Figures 13 through 16.

Here, it is preferable that each of the mobile units 370a and 370b respectively located in the first and second races 350a and 350b have a different weight.

This is because of the consideration that the centrifugal force applied to the mobile units 370a and 370b during the rotation of the clamper main body 310 is proportional to the mass of the respective mobile unit 370 and the distance between the center of the mobile unit 370 and the center of rotation of the clamper main body 310. That means that the diameters of the first and second races 350a and 350b and the mass of the mobile unit 370a and 370b are determined considering the allowable error of the disk eccentric center of gravity.

Although Figure 26 shows the clamper having two races 350a and 350b, it is possible to have two or more races 350 provided to the clamper incorporating a self-compensating dynamic balancer 300.

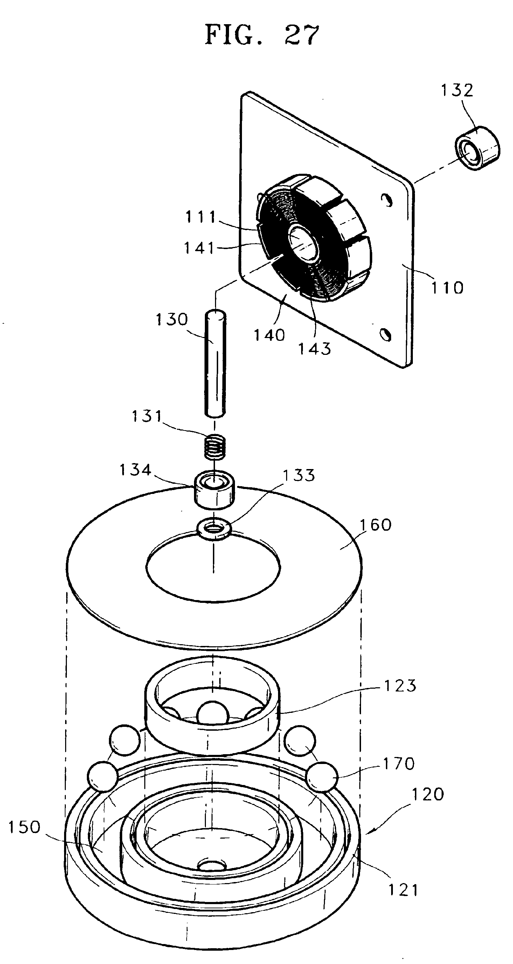

A spindle motor incorporating a self-compensating dynamic balancer employed will now be described in detail with reference to Figures 27 through 30.

The spindle motor incorporating a self-compensating dynamic balancer is installed at the deck plate 70 and rotates the turntable 200 coupled on the rotation shaft 130, as shown in Figure 2.

The spindle motor 100 providing background knowledge for an embodiment of the present invention includes a motor base 110, a rotation shaft 130, a stator 140, a rotor 120, first and second bearings 132 and 134, a circular race 150 integrally formed inside the rotor 120, a mobile unit 170 installed inside the race 150, and a cover member 160 for covering the opening of the race 150.

The motor base 110 is coupled with the deck plate 70 (see Figure 2) and has a through hole 111. The rotation shaft 130 together with the bearings 132 and 134 inserts into the through hole 111.

The stator 140 is fixed to the bottom surface of the motor base 110 and includes a yoke 141 facing the rotor 120 and a coil member 143 disposed at the inner side of the yoke 141. The bearings 132 and 134 which are disposed between the through hole 111 and the shaft 130 support the shaft 130 in the radial and axial directions thereof. Accordingly, a pair of the bearings 132 and 134 are provided and disposed inside the through hole 111 separated by a predetermined distance. That is, the inner ring of the first bearing 132 is fixed to the rotation shaft 130 and the outer ring thereof is fixed within the through hole 111 so movements in the radial and axial directions of the rotation shaft 130 are prevented. The second bearing 130 is inserted into the through hole 111 to be capable of sliding therein in order to prevent the rotation shaft 134 from being angled. An elastic member 131 is disposed inside the through hole 111 between the first bearing 132 and the second bearing 134 to alleviate the rotational vibration of the rotor 120 being transmitted to the motor base 110. It is preferable to use a metal bearing as the bearings 132 and 134 considering the positional accuracy necessary for high-speed rotation. Also, it is possible to employ other types of bearings such as a ball bearing or a dynamic pneumatic bearing.

The rotor 120 includes a case 121 fixed to one end of the rotation shaft 130 and installed to enclose the stator 140 and a magnet 123 fixed inside the case 121 to surround the yoke 141. Here, a fixing member 133 is further included at the coupling between the case 121 and the rotation shaft 130 to prevent the rotation shaft 130 from slipping off or running idly with respect to the case 121.

The race 150 is formed integrally with the case 121, and inside the case 121, concentric with the rotation shaft 130. The mobile unit 170 is installed to be capable of moving inside the race 150 and moves toward the outer circumference of the race 150 due to a centrifugal force generated during the rotation of the case 121. The cover member 160 covers the opening of the race 150.

The cover member 160 and the race 150 are coupled using an adhesive, a groove and protrusion assembly formed at corresponding positions, or screws.
The opening of the race 150 can be formed throughout the entire surface of the upper surface of the race 150, as shown in the drawing, or formed as part of the upper surface of the race 150, in a size large enough to insert the mobile unit 170 into the race 150.

The mobile unit 170 consists of a plurality of the rigid bodies 171 and/or a fluid 180 installed to be capable of moving away from the rotation center of the rotor 120 inside the race 150 during the rotation of the rotor 120.

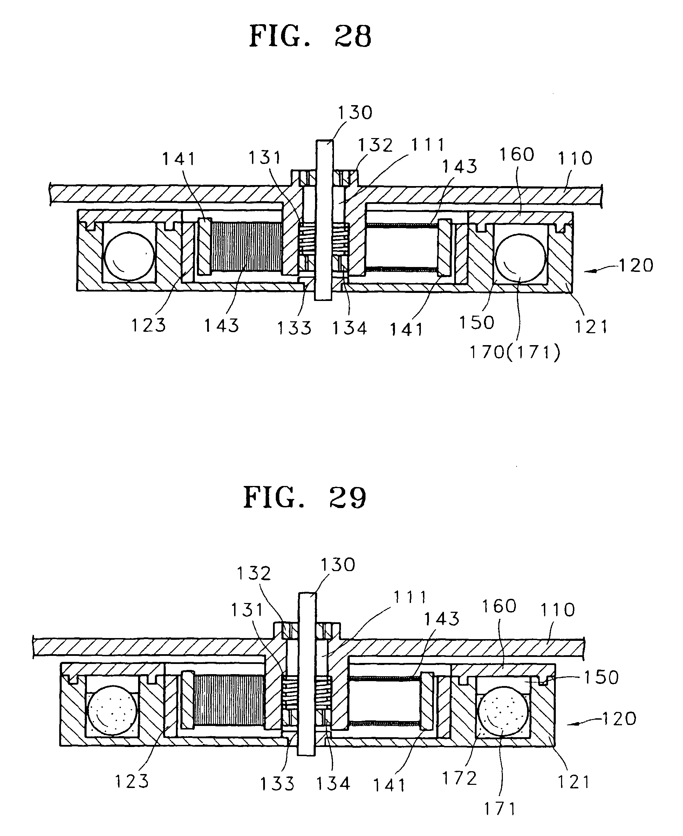

Figures 27 and 28 show a case in which a plurality of rigid bodies 171 are included as the mobile unit 170 inside the race 150. The rigid body 171 is installed to be capable of freely rolling or sliding such that the position of the rigid body 171 can be determined according to the centrifugal force generated during the rotation of the rotor 120.

It is preferable that the rigid body 171 is spherical, cylindrical, has a truncated conic shape, or is a fan-shaped block, as shown in Figures 9 through 12. Further, the shape of the rigid body 171 may be modified on the condition that the rigid body 171 can freely move inside the race 150.

As shown in Figure 29, the fluid 172 can be included along with the rigid body 171 as the mobile unit 170. Since the fluid 180 has a large contact area with respect to the race 150 and the cover member 160 and exhibits very high viscosity compared to the rigid body 171, the fluid 172 employed with the rigid body 171 inside the race 150 can effectively compensate for an internal vibratory force generated due to an eccentric center of gravity of the disk 1 (see Figure 2).

Here, it is preferable that the rigid body 171 is formed of a non-magnetic substance to be free from influence of the magnetic force of the magnet 123 (see Figure 4), so that the movement of the rigid body 171 is determined dependent on the eccentric center of gravity position of the disk 1 and the rotation of the rotor 120.

Also, the rigid body 171 is preferably formed of a non-oxidizing substance or is anti-oxidation coated to prevent the smooth rolling or sliding of the rigid body 171 inside the race 150 from being hindered by oxidation, i.e., corrosion. Also, the rigid body 171 can be formed of a substance having fine particles when oxidized in air, so that the movement of the rigid body 171 is not affected.

The fluid 172 can be employed without the rigid body 171 as the mobile unit 170.

The shapes of a portion formed by the race 150 and the cover member 160 where the mobile unit 170 is placed is the same as those described earlier with reference to Figures 13 through 16.

Also, it is preferable that the case 121 including the race 150 and the cover member 160 are formed of a non-magnetic substance to be free from influence of a magnetic force generated between the rigid body 171 and itself.

Further, the case 121 is preferably formed of a non-oxidizing substance or is anti-oxidation coated.

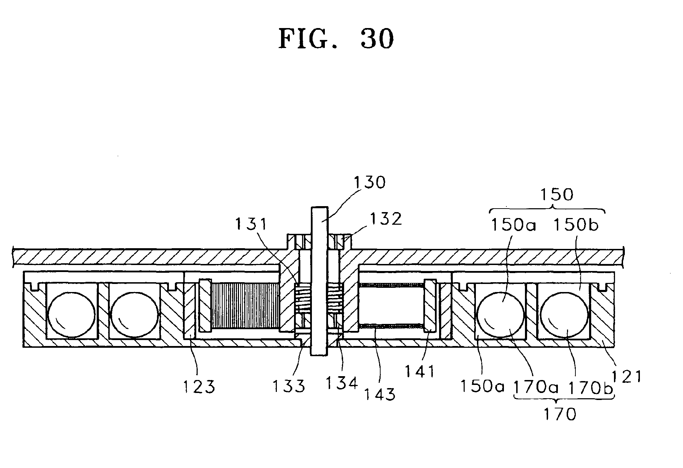

Referring to Figure 30, a spindle motor 100 incorporating the embodiment of the self-compensating dynamic balancer will now be described.

As shown in the drawing, the spindle motor 100 includes a rotation shaft 130, a motor base 110, bearings 132 and 134, a stator 140, a rotor 120, a circular race 150 formed inside the rotor 120 and concentric with the rotation shaft 130, a mobile unit 170 installed to be capable of moving inside the race 150, and a cover member 160 for covering an opening of the race 150. Here, the first and second races 150a and 150b are formed adjacent to each other and concentric with the rotor 120 are provided as the race 150.

Since the shape and material of the mobile unit 170, the race 150 and the cover member 160 are the same as those described above, a detailed description thereof will be omitted.

Here, it is preferable that the weights of mobile units 170a and 170b installed in the first and second races 150a and 150b, respectively, are different from each other.

This is because of the consideration that a centrifugal force applied to the case 121 during rotation of the rotor 120 is proportional to the mass of each of the respective mobile units 170a and 170b and the distance between the center of the mobile unit 170 and the rotation center of the rotor 120. That is, the diameter of the first and second races 150a and 150b and the mass of the mobile unit 170a and 170b are determined considering the allowable error of the eccentric center of gravity of the disk 1 (see Figure 2).

Although a spindle motor 100 having two races 150a and 150b is shown in Figure 30, it is possible to provide a spindle motor incorporating a self-compensating dynamic balancer 100 with two or more races.

As shown in Figure 2, a disk player preferably includes the deck base 50, the deck plate 70, the buffering member 60, the spindle motor 100, the turntable 200 and the clamper 300.

In a embodiment, the disk player includes a clamper incorporating a self-compensating dynamic balancer 300 as described with reference to Figures 22 through 26 is employed.

Further, in the disk player as described above, the self-compensating dynamic balancer 400 can be integrally formed with not just one of the rotating members such as the turntable 200, the clamper 300 and the spindle motor 100 but also two or more of the rotating members considering the rotational speed of the disk 1 (see Figure 2) and the scope of the allowable error of the position of the eccentric center of gravity.

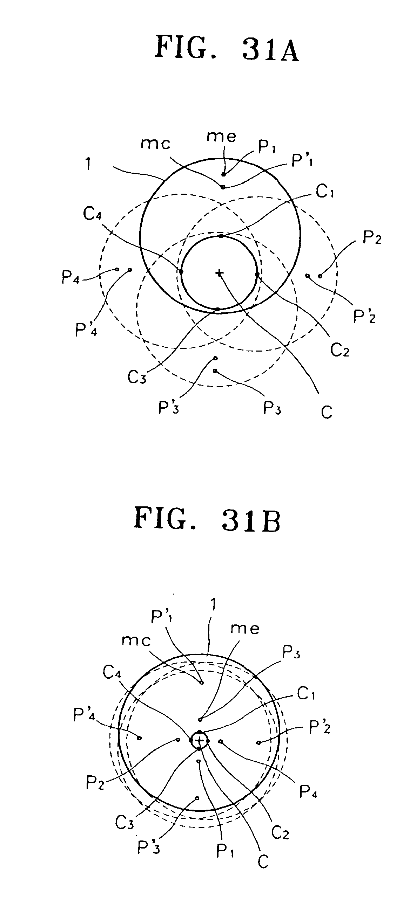

Hereinafter, the effects of vibration reduction generated when the disk player incorporating a self-compensating dynamic balancer and the rotating members incorporating a self-compensating dynamic balancer, i.e., the turntable 200, the clamper 300 and the spindle motor 100, are operated, will be described with reference to Figures 31A and 31B.

When the angular frequency of the disk 1 is equal to or less than the natural frequency, as shown Figure 31A, the position (pᵢ, i=1, 2, 3 and 4) of the eccentric center of gravity mₑ of the disk 1 and the position (p'ᵢ, i=1, 2, 3 and 4) of a compensated mass m_{c}, i.e., the center of gravity of the self-compensating dynamic balancer including the race, the mobile unit and the cover member, are located opposite the revolution center c, with respect to the corresponding positions (cᵢ, i=1, 2, 3 and 4) of the rotation shaft. Thus, the degree of eccentricity of the rotation becomes large.

However, when the angular frequency of the disk 1 is much greater than the natural frequency as when the disk rotates at a normal speed, as shown Figure 31B, the revolution center c and the position (pᵢ, i=1, 2, 3 and 4) of the eccentric center of gravity mₑ of the disk 1 are located in the same direction with respect to the rotation shaft, and the position (p'ᵢ, i=1, 2, 3 and 4) of the compensated mass m_{c} is located in the opposite direction due to the centrifugal force. Thus, an unbalanced state generated due to the eccentric center of gravity mₑ of the disk 1 is compensated for and the eccentricity of rotation of the rotation shaft is drastically reduced. Consequently, the internal vibratory force of the deck plate due to the eccentric center of gravity mₑ of the disk 1 is alleviated.

As described above, the disk player incorporating a self-compensating dynamic balancer, the spindle motor and the rotating members rotated by the spindle motor compensates for the internal vibration generated due to the eccentric center of gravity of a disk, by generating a centrifugal force directed from the orbital center of the disk radially outward which is generated by the mobile unit inside the race. Therefore, the internal vibration generated by the orbital rotation of the eccentric center of gravity of the disk can be effectively limited.

Also, the disk player employing a buffering member exhibiting a weak rigidity can alleviate external impacts. Thus, the disk player described above is appropriate for a high-speed CD drive of greater than 6X-speed, a CD-ROM drive, or a DVD drive.

## Claims

1. A spindle motor (100) incorporating a self-compensating dynamic balancer (400), comprising:
a rotation shaft (130);
a motor base (110) having a through hole (111) in which said rotation shaft is rotatably inserted;
a stator (140) fixedly installed at said motor base (110) and having a yoke (141) and a coil (143) wound around said yoke;
a rotor (120) having a case (121) which is fixed to an end of said rotation shaft and encloses said stator, and a magnet which is fixed inside said case to face said yoke;
at least a first and a second non-magnetic circular race (150a, 150b) which are integrally formed to be concentric and adjacent to said case and rotate around the center of rotation of said rotation shaft;
a mobile unit (170a, 170b) located inside each of said races to be capable of moving; and
a cover member (160) which is coupled to an opening of said race for sealing the inner space of said race;
**characterised in that**;
the first and second circular races (150a, 150b) are formed to be concentric and adjacent to each other; and
said mobile unit (170) includes at least one rigid body, and the weight of a mobile unit (170a) installed in the first race (150a) is different from the weight of a mobile unit (170b) installed in the second race (150b).

2. The spindle motor (100) as claimed in claim 1, wherein said placing member (210) and said cover member (260), or said clamper main body (210) and said cover member (360) or said case (121) and said cover member (160), respectively, are formed of a non-magnetic material in order to avoid being influenced by a magnetic force.

3. The spindle motor (100) as claimed in claim 1, wherein said placing member (210) and said cover member (260), or said clamper main body (210) and said cover member (360) or said case (121) and said cover member (160), respectively, are formed of a substance selected from the group consisting of tungsten carbide (WC), beryllium steel (CuBe), Hastelloy C-276, silicon nitride (Si₃N₄), zirconia (ZrO₂), brass, aluminum, austenite-series steel YHD50, a non-magnetic metal such as SUS300, SUS304 and SUS316, ceramic and a synthetic resin.

4. The spindle motor (100) as claimed in claim 1, wherein said placing member (210) and said cover member (260), or said clamper main body (210) and said cover member (360) or said case (121) and said cover member (160), respectively, are formed of a non-oxidizing substance which does not corrode.

5. The spindle motor (100) as claimed in claim 1, wherein said placing member (210) and said cover member (260), or said clamper main body (210) and said cover member (360) or said case (121) and said cover member (160), respectively, are formed of a substance selected from the group consisting of SUS300, ceramic and a synthetic resin.

6. The spindle motor (100) as claimed in claim 1, wherein in said placing member (210) and said cover member (260), or said clamper main body (210) and said cover member (360) or said case (121) and said cover member (160), respectively, the surfaces facing said rigid body are anti-oxidation coated.

7. An apparatus as claimed in claim 6, wherein said anti-oxidation coating is formed of one selected from the group consisting of zinc and nickel-chromium plated over a base material of carbon steel or chromium steel.

## Patentansprüche

1. Spindelmotor (100), der eine selbstkompensierende dynamische Ausgleichseinrichtung (400) enthält, wobei er umfasst:
eine Drehwelle (130);
einen Motoruntersatz (110) mit einem Durchgangsloch (111), in das die Drehwelle drehbar eingeführt ist;
einen Stator (140), der fest an dem Motor-Untersatz (110) installiert und ein Joch (141) sowie eine Spule (143) aufweist, die um das Joch herumgewickelt ist;
einen Rotor (120) mit einem Gehäuse (121), der an einem Ende der Drehwelle befestigt ist und den Stator umschließt, sowie einem Magneten, der im Inneren des Gehäuses dem Joch zugewandt befestigt ist;
wenigstens eine erste und eine zweite nicht magnetische kreisförmige Laufbahn (150a, 150b), die integral so ausgebildet sind, dass sie konzentrisch sind und an das Gehäuse angrenzen und sich um den Drehmittelpunkt der Drehwelle herum drehen;
eine bewegliche Einheit (170a, 170b), die im Inneren jeder der Laufbahnen so angeordnet ist, dass sie sich bewegen kann; und
ein Abdeckelement (160), das mit einer Öffnung der Laufbahn verbunden ist, um den Innenraum der Laufbahn abzudichten;
**dadurch gekennzeichnet, dass**
die erste und die zweite kreisförmige Laufbahn (150a, 150b) so ausgebildet sind, dass sie konzentrisch zueinander sind und aneinander angrenzen; und
die bewegliche Einheit (170) wenigstens einen starren Körper enthält und das Gewicht einer beweglichen Einheit (170a), die in der ersten Laufbahn (150a) installiert ist, sich von dem Gewicht einer beweglichen Einheit (170b) unterscheidet, die in der zweiten Laufbahn (150b) installiert ist.

2. Spindelmotor (100) nach Anspruch 1, wobei das Anordnungselement (210) und das Abdeckelement (260) oder der Klemm-Hauptkörper (210) und das Abdeckelement (360) oder das Gehäuse (121) und das Abdeckelement (160) jeweils aus einem nicht magnetischen Material bestehen, um zu verhindern, dass sie durch eine Magnetkraft beeinflusst werden.

3. Spindelmotor (100) nach Anspruch 1, wobei das Anordnungselement (210) und das Abdeckelement (260), oder der Klemm-Hauptkörper (210) und das Abdeckelement (360) oder das Gehäuse (121) und das Abdeckelement (160) jeweils aus einer Substanz bestehen, die aus der Gruppe ausgewählt wird, die aus Wolframkarbid (WC), Berylliumstahl (CuBe), Hastelloy C-276, Siliziumnitrid (Si₃N₄), Zirkonoxid (ZrO₂), Messing, Aluminium, austenitischem Stahl YHD50, einem nicht magnetischen Metall, wie beispielsweise SUS300, SUS304 und SUS316, Keramik und einem Kunstharz ausgebildet wird.

4. Spindelmotor (100) nach Anspruch 1, wobei das Anordnungselement (210) und das Abdeckelement (260) oder der Klemm-Hauptkörper (210) und das Abdeckelement (360) oder das Gehäuse (121) und das Abdeckelement (160) jeweils aus einer nicht oxidierenden Substanz bestehen, die nicht korrodiert.

5. Spindelmotor (100) nach Anspruch 1, wobei das Anordnungselement (210) und das Abdeckelement (260) oder der Klemm-Hauptkörper (210) und das Abdeckelement (360) oder das Gehäuse (121) und das Abdeckelement (160) jeweils aus einer Substanz bestehen, die aus der Gruppe ausgewählt wird, die aus SUS300, Keramik und einem Kunstharz besteht.

6. Spindelmotor (100) nach Anspruch 1, wobei bei dem Anordnungselement (210) und dem Abdeckelement (260) oder dem Klemm-Hauptkörper (210) und dem Abdeckelement (360) oder dem Gehäuse (121) und dem Abdeckelement (160) jeweils die Flächen, die dem starren Körper zugewandt sind, Antioxidationsbeschichtung aufweisen.

7. Vorrichtung nach Anspruch 6, wobei die Antioxidationsbeschichtung aus einem Material besteht, das aus der Gruppe ausgewählt wird, die aus Zink und NickelChrom, plattiert auf ein Trägermaterial aus Kunststoffstahl oder Chromstahl besteht.

## Revendications

1. Moteur à broche (100) incorporant un dispositif d'équilibrage dynamique à compensation automatique (400), comportant :
un axe de rotation (130),
un socle moteur (110) ayant un trou de passage (111) dans lequel ledit axe de rotation est inséré en rotation,
un stator (140) installé de manière fixe dans ledit socle moteur (110) et ayant une culasse (141) et une bobine (143) enroulée autour de ladite culasse,
un rotor (120) ayant un boîtier (121) qui est fixé à une extrémité dudit axe de rotation et entoure ledit stator, et un aimant qui est fixé à l'intérieur dudit boîtier pour faire face à ladite culasse,
au moins un premier et un second tube circulaire non-magnétique (150a, 150b) qui sont formés intégralement pour être concentriques et adjacents audit boîtier et tournent autour du centre de rotation dudit axe de rotation,
une unité mobile (170a, 170b) localisée à l'intérieur de chacun desdits tubes pour pouvoir se déplacer, et
un élément de recouvrement (160) qui est couplé à une ouverture dudit tube pour fermer l'espace intérieur dudit tube,
**caractérisé en ce que** :
les premier et second tubes circulaires (150a, 150b) sont formés pour être concentriques l'un par rapport à l'autre et adjacents l'un à l'autre, et
ladite unité mobile (170) inclut au moins un corps rigide, et le poids d'une unité mobile (170a) installée dans le premier tube (150a), est différent du poids d'une unité mobile (170b) installée dans le second tube (150b).

2. Moteur à broche (100) selon la revendication 1, dans lequel ledit élément de mise en place (210) et ledit élément de recouvrement (260), ou ledit corps principal de dispositif de serrage (210) et ledit élément de recouvrement (360) ou ledit boîtier (121) et ledit élément de recouvrement (160), respectivement, sont formés d'un matériau non-magnétique afin d'éviter d'être influencés par une force magnétique.

3. Moteur à broche (100) selon la revendication 1, dans lequel ledit élément de mise en place (210) et ledit élément de recouvrement (260), ou ledit corps principal de dispositif de serrage (210) et ledit élément de recouvrement (360) ou ledit boîtier (121) et ledit élément de recouvrement (160), respectivement, sont constitués d'une substance sélectionnée dans le groupe comportant du carbure de tungstène (WC), de l'acier au béryllium (CuBe), de l'Hastelloy C-276, du nitrure de silicium (Si₃N₄), de la zircone (ZrO₂), du laiton, de l'aluminium, de l'acier de série austénitique YHD50, un métal non-magnétique tel que SUS300, SUS304 et SUS316, de la céramique et une résine synthétique.

4. Moteur à broche (100) selon la revendication 1, dans lequel ledit élément de mise en place (210) et ledit élément de recouvrement (260), ou ledit corps principal de dispositif de serrage (210) et ledit élément de recouvrement (360) ou ledit boîtier (121) et ledit élément de recouvrement (160), respectivement, sont constitués d'une substance inoxydable qui ne se corrode pas.

5. Moteur à broche (100) selon la revendication 1, dans lequel ledit élément de mise en place (210) et ledit élément de recouvrement (260), ou ledit corps principal de dispositif de serrage (210) et ledit élément de recouvrement (360) ou ledit boîtier (121) et ledit élément de recouvrement (160), respectivement, sont constitués d'une substance sélectionnée dans le groupe comportant SUS300, de la céramique et une résine synthétique.

6. Moteur à broche (100) selon la revendication 1, dans lequel dans ledit élément de mise en place (210) et ledit élément de recouvrement (260), ou ledit corps principal de dispositif de serrage (210) et ledit élément de recouvrement (360) ou ledit boîtier (121) et ledit élément de recouvrement (160), respectivement, les surfaces faisant face audit corps rigide sont revêtues d'un revêtement anti-oxydation.

7. Dispositif selon la revendication 6, dans lequel ledit revêtement anti-oxydation est constitué d'un élément sélectionné dans le groupe comportant du zinc et du nickel-chrome plaqué sur un matériau de base d'acier au carbone ou d'acier au chrome.
